# FASCICULE DE BREVET EUROPEEN

(11) **EP 3 671 135 B1**
(45) Date de publication et mention de la délivrance du brevet: **17.08.2022**
(21) Numéro de dépôt: 18215440.1
(22) Date de dépôt: 21.12.2018
(51) Int. Cl.: G01D 5/347, G04C 3/00

(54) **SYSTEME ET PROCEDE DE DETERMINATION D'AU MOINS UN PARAMETRE RELATIF A UN MOUVEMENT ANGULAIRE D'UN AXE**
SYSTEM UND VERFAHREN ZUR BESTIMMUNG MINDESTENS EINES PARAMETERS DER WINKELBEWEGUNG EINER ACHSE
SYSTEM AND METHOD FOR DETERMINING AT LEAST ONE PARAMETER RELATING TO AN ANGULAR MOVEMENT OF AN AXIS

(43) Date de publication de la demande: 24.06.2020
(73) Titulaire: The Swatch Group Research and Development Ltd, 2074 Marin (CH)
(72) Inventeur: TORTORA, Pierpasquale, 2000 Neuchâtel (CH); ZANESCO, Vittorio, 2000 Neuchâtel (CH)
(74) Mandataire: ICB SA

(56) Documents cités:
- EP-A1- 2 884 239
- EP-A1- 3 015 925
- US-B1- 9 797 753

## Description

### DOMAINE TECHNIQUE DE L'INVENTION

L'invention concerne un système et un procédé de détermination d'au moins un paramètre relatif à un mouvement angulaire d'un axe apte à tourner sur lui-même. Un tel paramètre est par exemple la position angulaire, ou bien la vitesse de rotation, ou encore le sens de rotation de l'axe.

L'invention concerne également une pièce d'horlogerie comprenant le système de détermination. La pièce d'horlogerie est par exemple une montre à quartz, l'axe étant alors l'axe solidaire d'une couronne de réglage de l'heure.

### ETAT DE LA TECHNIQUE

Il est connu de munir une montre, par exemple une montre à quartz, d'une couronne électronique grâce à laquelle un utilisateur peut régler l'heure et donc la position des aiguilles sans contact avec le rouage de la montre. Pour ce faire, un dispositif électronique ou optique ou électro-optique est agencé au sein de la montre, qui permet de déterminer un ou plusieurs paramètres relatifs au mouvement angulaire de l'axe solidaire de la couronne, et d'ainsi positionner les aiguilles à la position souhaitée par l'utilisateur. Plus précisément, l'action de rotation de la couronne effectuée par l'utilisateur est traduite par le dispositif en impulsion électronique vers un processeur de la montre, afin de lui communiquer de combien de pas et dans quelle direction il faut tourner les aiguilles. Ce genre de codage peut par exemple être réalisé via un contact galvanique, une bobine magnétique exploitant l'effet Hall, un dispositif capacitif, ou encore un dispositif électro-optique mettant en œuvre une émission et détection de signaux lumineux.

Un tel dispositif électro-optique, permettant notamment de déterminer la position angulaire et/ou le sens de rotation de l'axe solidaire d'une couronne de montre, est par exemple décrit dans le document brevet EP 3 015 925 A1. L'axe solidaire de la couronne présente sur son pourtour extérieur une surface de réflexion. Le dispositif comporte une source de lumière destinée à illuminer la surface de réflexion, ainsi qu'un détecteur de lumière destiné à recevoir un faisceau de lumière réfléchie issu de la surface de réflexion et à générer un signal électrique représentatif du faisceau. Le dispositif comporte en outre un processeur configuré pour former, à partir des signaux électriques reçus du détecteur, au moins deux motifs de pixels à deux instants différents. Le processeur est également configuré pour comparer les motifs de pixels successifs, et pour en déduire au moins un paramètre relatif au mouvement angulaire de l'axe si un décalage s'est produit entre les motifs de pixels.

Toutefois, un inconvénient du dispositif électro-optique proposé dans le document brevet EP 3 015 925 A1 est qu'il génère des temps de traitement relativement importants pour le processeur, du fait du nombre des données acquises. Une telle solution requiert ainsi de fournir une puissance suffisante pour le processeur, ce qui impacte la taille générale de ce dernier, ainsi que la consommation du dispositif. Or, l'espace et l'énergie disponibles étant particulièrement contraints au sein d'une montre, ceci peut s'avérer problématique pour l'encombrement général du système et son autonomie.

Le document brevet US 9,797,753 B1 décrit un encodeur optique pour le réglage de fonctions d'une montre. L'encodeur comprend un axe rotatif avec une surface structurée, une source de lumière pour illuminer la surface structurée, un réseau de capteurs optiques pour recevoir une portion d'une réflexion de lumière sur la surface structurée et un processeur pour traiter les informations des capteurs optiques. Une seule source de lumière est prévue ce qui ne permet pas de déterminer précisément et de manière simple tout mouvement angulaire de l'axe en rotation.

### RESUMÉ DE L'INVENTION

L'invention a donc pour but de fournir un système électro-optique de détermination d'au moins un paramètre relatif à un mouvement angulaire d'un axe apte à tourner sur lui-même, qui permette de fonctionner avec un nombre de données acquises limité pour réduire la puissance de traitement nécessaire, tout en assurant une détermination précise et rapide du ou des paramètre(s).

A cet effet, l'invention concerne un système de détermination d'au moins un paramètre relatif à un mouvement angulaire d'un axe, notamment d'un axe solidaire d'une couronne de pièce d'horlogerie, qui comprend les caractéristiques mentionnées dans la revendication indépendante 1.

Des formes particulières du système sont définies dans les revendications dépendantes 2 à 7.

Grâce à la forme particulière du réflecteur rotatif, les détecteurs de lumière du système selon l'invention génèrent chacun un signal électrique représentatif qui présente une forme sensiblement sinusoïdale, lorsque le réflecteur tourne sur lui-même selon un même sens de rotation. Plus précisément, la surface extérieure apparente du réflecteur, vue depuis chaque paire d'émetteur-détecteur, évolue lorsque le réflecteur tourne sur lui-même, d'une manière telle que le signal électrique représentatif généré par chaque détecteur présente une forme sensiblement sinusoïdale, lorsque le réflecteur tourne sur lui-même selon un même sens de rotation. La surface extérieure apparente du réflecteur forme la partie active réfléchissante de ce dernier. Grâce à la forme sensiblement sinusoïdale des signaux générés par les détecteurs, le traitement effectué par le processeur du système, pour la détermination du ou des paramètre(s) relatif(s) au mouvement angulaire de l'axe, est allégé. Ceci permet de déterminer le ou les paramètre(s) de manière précise, fiable, et avec un nombre de données acquises limité permettant un temps de traitement rapide, un encombrement faible et une consommation d'énergie minimale du processeur.

Avantageusement, les deux paires d'émetteur-détecteur sont agencées par rapport au réflecteur rotatif de manière à ce que les deux émetteurs, respectivement les deux détecteurs, sont agencés tête-bêche l'un par rapport à l'autre. Ceci permet d'introduire un déphasage entre les signaux générés par les deux détecteurs de lumière, lorsque le réflecteur tourne sur lui-même. Un tel déphasage permet au produit programme d'ordinateur implémenté dans des moyens mémoire du système de pouvoir déterminer le sens ou la vitesse de rotation de l'axe. En outre, grâce à cet agencement spatial des deux paires d'émetteur-détecteur, aucun des détecteurs de lumière ne rate le faisceau de lumière réfléchie issu du réflecteur.

Avantageusement, les deux paires d'émetteur-détecteur sont disposées de part et d'autre du réflecteur rotatif, sur un cercle dont le centre est sensiblement le centre du réflecteur rotatif, et sont décalées entre elles d'un angle présentant une valeur distincte de 180°. Cette caractéristique permet d'introduire un déphasage et/ou d'accentuer le déphasage existant entre les signaux générés par les deux détecteurs de lumière, lorsque le réflecteur tourne sur lui-même. En effet, les deux paires d'émetteur-détecteur ne voient alors pas le réflecteur sous le même angle, ce qui introduit un déphasage entre les signaux générés. De préférence, le déphasage total créé entre les deux signaux est d'au moins 25°, de préférence encore sensiblement égal à 90°.

Selon une caractéristique technique particulière de l'invention, le réflecteur rotatif est formé à partir d'un cylindre de révolution, sur les bords duquel sont ménagés plusieurs chanfreins obliques contigus, la surface extérieure de la partie non chanfreinée du réflecteur formant ladite partie active réfléchissante du réflecteur. Les chanfreins sont de préférence réalisés depuis les bords et des deux côtés du cylindre de révolution depuis une partie médiane.

Avantageusement, chaque chanfrein oblique définit un angle sensiblement égal à 50° avec un plan tangent à la surface extérieure de la partie non chanfreinée du réflecteur, et parallèle à la direction longitudinale. Le choix de cet angle particulier permet d'obtenir un bon compromis entre une valeur d'intensité suffisante pour le signal représentatif généré par le détecteur, et une bonne dynamique pour ce même signal. Ceci permet d'améliorer la précision et la fiabilité de la détermination du ou des paramètre(s) relatif(s) au mouvement angulaire de l'axe.

A cet effet, l'invention concerne également une pièce d'horlogerie comportant le système de détermination décrit ci-dessus, qui comprend les caractéristiques mentionnées dans la revendication indépendante 8.

Une forme particulière de la pièce d'horlogerie est définie dans la revendication dépendante 9.

A cet effet, l'invention concerne également un procédé de détermination d'au moins un paramètre relatif à un mouvement angulaire d'un axe, notamment d'un axe solidaire d'une couronne de pièce d'horlogerie, au moyen du système de détermination décrit ci-dessus, et qui comprend les caractéristiques mentionnées dans la revendication indépendante 10.

Des formes particulières du procédé sont définies dans les revendications dépendantes 11 à 13.

Avantageusement, le procédé comprend en outre une étape, mise en œuvre par le processeur, consistant à représenter les deux signaux électriques reçus comme le sinus et le cosinus d'une même fonction et à calculer une fonction d'arc tangente ayant pour variable le rapport entre les deux signaux. Ceci permet de déterminer la position angulaire de l'axe à tout moment, et ce de manière non équivoque.

Avantageusement, le procédé comprend en outre une étape, mise en œuvre par le processeur, consistant à déterminer, en fonction du signe de la pente de la fonction d'arc tangente calculée, le sens de rotation de l'axe.

Avantageusement, le procédé comprend en outre une étape, mise en œuvre par le processeur, consistant à commander l'allumage de chacune des sources de lumière de manière alternée. Ceci permet d'éviter que le détecteur d'une des paires d'émetteur-détecteur soit influencé par la lumière issue de l'émetteur de l'autre paire d'émetteur-détecteur.

A cet effet, l'invention concerne également un programme d'ordinateur comportant des instructions de programme stockées dans des moyens mémoire du système de détermination décrit ci-dessus et qui, lorsqu'exécutées par le processeur du système, sont aptes à mettre en œuvre le procédé de détermination tel que décrit ci-dessus, et qui comprend les caractéristiques mentionnées dans la revendication indépendante 14.

### BRÈVE DESCRIPTION DES FIGURES

Les buts, avantages et caractéristiques du système et du procédé de détermination selon l'invention, ainsi que de la pièce d'horlogerie comprenant le système, apparaîtront mieux dans la description suivante sur la base d'au moins une forme d'exécution non limitative illustrée par les dessins sur lesquels :
- la figure 1 est une vue en perspective d'une montre munie d'une couronne de réglage de l'heure, et d'un système de détermination d'au moins un paramètre relatif à un mouvement angulaire de l'axe solidaire de la couronne, selon l'invention;
- la figure 2 est une vue en perspective du système de la figure 1, le système comprenant un réflecteur rotatif et deux paires d'émetteur-détecteur;
- la figure 3 est une vue de face du système de la figure 2;
- la figure 4 est une vue en perspective du réflecteur rotatif de la figure 2;
- les figures 5a-5d sont des vues de côté du réflecteur rotatif de la figure 2, dans différentes positions angulaires respectives du réflecteur;
- la figure 6 est un diagramme représentant l'évolution de deux signaux électriques générés par les détecteurs des deux paires d'émetteur-détecteurs en fonction de la position angulaire du réflecteur rotatif;
- la figure 7 est un organigramme représentant des étapes d'un procédé de détermination d'au moins un paramètre relatif à un mouvement angulaire d'un axe, mis en œuvre par le système de la figure 1; et
- la figure 8 est un diagramme représentant l'évolution d'une fonction d'arc tangente calculée par un processeur du système de la figure 2, en fonction de la position angulaire du réflecteur rotatif.

### DESCRIPTION DETAILLEE DE L'INVENTION

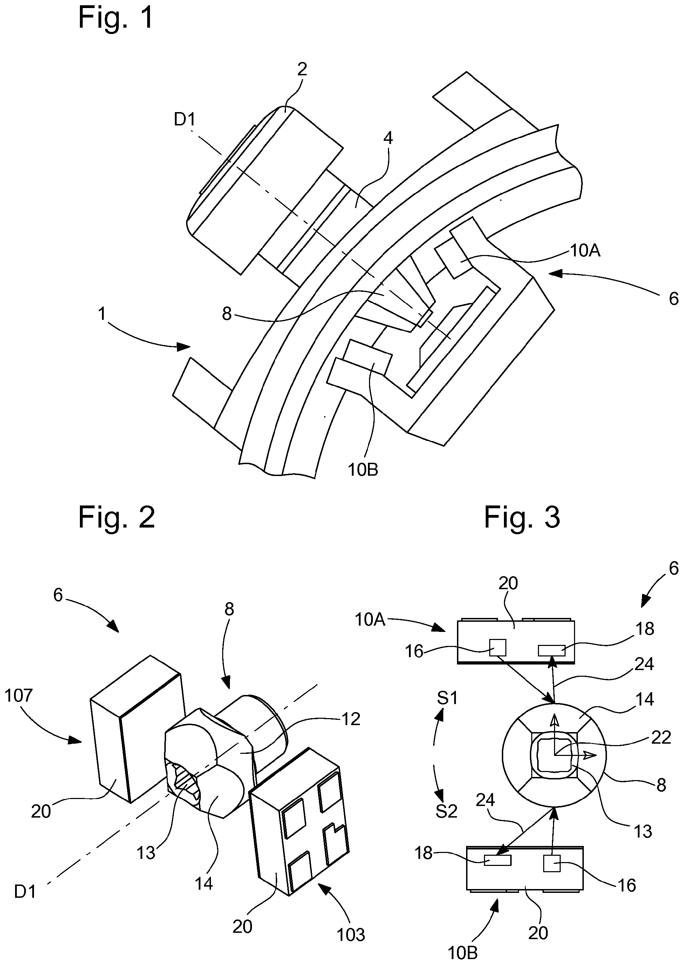

La figure 1 représente une partie d'une montre 1 munie d'une couronne 2 de réglage de l'heure. La couronne 2 est solidarisée à un axe 4 qui s'étend en partie à l'intérieur de la montre 1, notamment de la boîte de montre. La montre 1, qui est par exemple une montre à quartz, comprend en outre un système 6 de détermination d'au moins un paramètre relatif à un mouvement angulaire de l'axe 4 solidaire de la couronne 2.

L'axe 4 est apte à tourner sur lui-même autour d'une direction longitudinale D1. Plus précisément, lorsque la couronne 2 est tournée par un utilisateur pour le réglage de l'heure, l'axe 4 est entraîné en rotation sur lui-même autour de la direction D1. Il est à noter qu'optionnellement, la couronne 2 peut être configurée pour pouvoir être tirée et/ou poussée par un utilisateur, entraînant l'axe 4 en translation longitudinale. Lorsque l'axe 4 équipe une montre 1, comme c'est le cas dans l'exemple illustratif des figures 1 à 4, le diamètre de l'axe 4 est typiquement compris dans une plage allant de 0,5 à 2 mm.

Comme illustré sur les figures 2 et 3, le système 6 comprend, outre l'axe 4, un réflecteur rotatif 8 et deux paires 10A, 10B d'émetteur-détecteur de lumière. Le système 6 comprend également un processeur et des moyens mémoire, ces éléments n'étant pas représentés sur les figures pour des raisons de clarté.

Le réflecteur rotatif 8 est monté sur l'axe 4, autour de ce dernier. Le réflecteur rotatif 8 est ainsi solidarisé à l'axe 4. Le réflecteur rotatif 8 est par exemple monté sur une partie d'extrémité de l'axe 4, bien que cet agencement particulier du réflecteur 8 sur l'axe 4 ne soit nullement limitatif dans le cadre de la présente invention. Le réflecteur 8 et l'axe 4 peuvent être une seule pièce monobloc. Le réflecteur rotatif 8 présente une forme telle que sa surface extérieure apparente, vue depuis chaque paire 10A, 10B d'émetteur-détecteur et qui forme une partie active réfléchissante 12 du réflecteur 8 pour chaque paire 10A, 10B, évolue lorsque le réflecteur 8 tourne sur lui-même de manière régulière, notamment avec une vitesse presque constante.

Dans un mode de réalisation préférentiel représenté sur les figures 2 à 4, le réflecteur rotatif 8 est formé à partir d'un cylindre de révolution, sur les bords duquel sont ménagés plusieurs chanfreins obliques contigus 14. Le cylindre initial présente typiquement un diamètre de sensiblement 1,3 mm et une longueur de sensiblement 0,77 mm. Les chanfreins obliques 14 sont par exemple usinés sur les deux bords du cylindre et de préférence de manière symétrique. Le cylindre est muni d'un orifice traversant central 13 dans le sens de sa direction longitudinale D1, pour le passage de l'axe 4. La surface extérieure 12 de la partie non chanfreinée du réflecteur 8 forme la partie active réfléchissante du réflecteur 8. Dans l'exemple illustratif des figures 2 à 4, le réflecteur rotatif 8 comprend quatre chanfreins obliques contigus 14, de même surface et de même inclinaison. Dans ce cas, le réflecteur rotatif 8 présente une symétrie de révolution, sans que cela ne soit toutefois limitatif dans le cadre de la présente invention. D'autres configurations sont en effet possibles pour les chanfreins obliques 14, qui peuvent être de surface et/ou d'inclinaison différente(s). Le réflecteur rotatif 8 est par exemple en métal. Dans ce cas, la surface extérieure 12 de la partie non chanfreinée du réflecteur 8, formant la partie active réfléchissante de ce dernier, est de préférence polie. Le métal du réflecteur 8 est de préférence choisi de sorte que la surface polie 12 présente une bonne réflexion dans les longueurs d'onde de la lumière émise par les émetteurs de lumière. Par exemple, pour des émetteurs de lumière infrarouge, le métal choisi pour le réflecteur 8 peut être un dépôt d'or. Le choix du métal pour le réflecteur 8 est ainsi conditionné par le type d'émetteurs de lumière choisi, et peut être ajusté selon les contraintes du produit.

De préférence, chaque chanfrein oblique 14 définit un angle sensiblement égal à 50° avec un plan tangent à la surface extérieure 12 de la partie non chanfreinée du réflecteur 8, et parallèle à la direction longitudinale D1.

Chaque paire 10A, 10B d'émetteur-détecteur comprend une source de lumière 16 et un détecteur de lumière 18. La source de lumière 16 est typiquement constituée d'une ou de plusieurs diode(s) électroluminescentes, apte(s) par exemple à émettre de la lumière infrarouge. La source de lumière 16 et le détecteur de lumière 18 sont agencés dans un boîtier de protection 20 et sont de préférence isolés optiquement l'un de l'autre, par exemple au moyen d'une paroi de séparation. Chaque paire 10A, 10B d'émetteur-détecteur forme par exemple un dispositif unitaire du type détecteur de proximité.

Les deux paires 10A, 10B d'émetteur-détecteur sont disposées de part et d'autre du réflecteur rotatif 8, en regard du réflecteur 8. Dans un mode de réalisation préférentiel représenté sur la figure 3, les deux paires 10A, 10B d'émetteur-détecteur sont agencées par rapport au réflecteur rotatif 8 de manière à ce que les deux émetteurs 16, respectivement les deux détecteurs 18, sont agencés tête-bêche l'un par rapport à l'autre. De préférence, comme illustré sur la figure 3, les deux paires d'émetteur-détecteur 10A, 10B sont placées sur un cercle dont le centre est sensiblement le centre 22 du réflecteur rotatif 8, et sont décalées entre elles d'un angle présentant une valeur distincte de 180°.

De préférence encore, comme visible sur la figure 3, les deux paires 10A, 10B d'émetteur-détecteur et le réflecteur rotatif 8 sont disposés de sorte à définir un agencement spatial sensiblement en forme de « y ». Plus précisément, le réflecteur rotatif 8 est disposé au centre du « y », une première paire 10A d'émetteur-détecteur est disposée à l'extrémité libre d'une branche courte du « y », et l'autre paire 10B d'émetteur-détecteur est disposée à l'extrémité libre de la branche longue du « y ». Autrement dit, comme visible sur la figure 3, les deux paires 10A, 10B d'émetteur-détecteur sont disposées de part et d'autre du réflecteur rotatif 8 et sont décalées axialement entre elles.

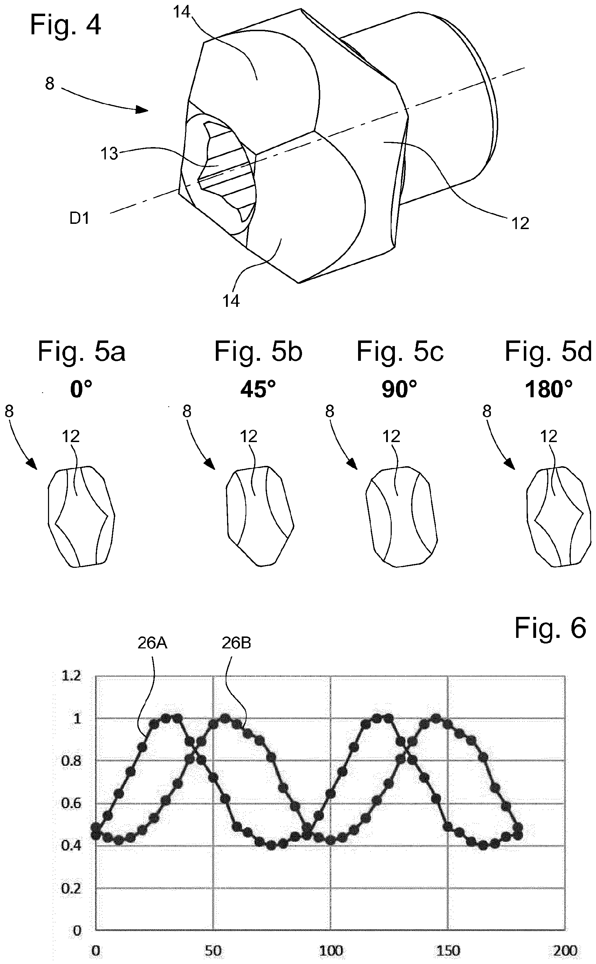

Chaque source de lumière 16 est destinée à illuminer une partie du réflecteur 8. Chaque détecteur de lumière 18 est destiné à recevoir un faisceau de lumière réfléchie 24 issu du réflecteur 8 et à générer un signal électrique représentatif du faisceau 24. Les chanfreins 14 étant des surfaces obliques, ceux-ci ne réfléchissent pas de lumière dans la direction des détecteurs 18. Ainsi, seule la surface extérieure apparente 12 du réflecteur 8, qui forme la partie active réfléchissante de ce dernier, réfléchit de la lumière dans la direction des détecteurs 18. La forme du réflecteur rotatif 8 est telle que sa surface extérieure apparente 12 évolue lorsque le réflecteur 8 tourne sur lui-même, d'une manière telle que le signal électrique représentatif généré par chaque détecteur 18 présente une forme sensiblement sinusoïdale lorsque le réflecteur 8 tourne sur lui-même selon un même sens de rotation S1, S2. Un tel signal 26A, 26B est par exemple visible sur la figure 6.

Les figures 5a à 5d illustrent l'évolution de la surface extérieure apparente 12 du réflecteur 8, vu depuis un des détecteurs 18 et tournant selon un même sens de rotation S1, S2, pour différentes positions angulaires du réflecteur 8 allant de 0° à 180° avec un pas de 45°. Il apparaît que la surface extérieure apparente 12 du réflecteur 8 s'élargit et se restreint graduellement pendant que le réflecteur 8 tourne sur lui-même, passant par un maximum à 0°, comme visible sur la figure 5a, et par un minimum à 90°, comme visible sur la figure 5c. L'évolution du rapport entre les surfaces apparentes 12 du réflecteur 8, telles qu'apparaissant sur les figures 5a à 5d, peut s'apparenter sensiblement à un sinus. Il est à noter que les formes particulières prises par la surface apparente 12, et telles que visibles sur les figures 5a à 5d, ne sont nullement limitatives dans le cadre de la présente invention. D'autres formes sont possibles pour la surface extérieure apparente 12 tant que le signal électrique représentatif généré par chaque détecteur 18 présente une forme sensiblement sinusoïdale lorsque le réflecteur 8 tourne sur lui-même.

Le processeur est configuré pour traiter chacun des signaux électriques 26A, 26B générés par les détecteurs 18. Le processeur est configuré en outre pour déterminer, en fonction du résultat du traitement, au moins un paramètre relatif au mouvement angulaire de l'axe 4, comme cela sera détaillé par la suite. Le ou les paramètre(s) déterminé(s) sont par exemple la position angulaire, la vitesse de rotation, ou encore le sens de rotation de l'axe 4.

Sur la figure 6 sont représentés deux signaux 26A, 26B issus des détecteurs 18, selon différents angles correspondant à une rotation sur lui-même du réflecteur rotatif 8 de 180° avec des pas de 5°. Chaque signal 26A, 26B est issu d'un détecteur respectif 18 d'une des paires 10A, 10B d'émetteur-détecteur. Chaque signal 26A, 26B présente une forme sensiblement sinusoïdale. En outre, dans l'exemple illustratif de la figure 6, les signaux 26A, 26B sont déphasés entre eux de 25° environ. De préférence, les signaux 26A, 26B sont déphasés d'au moins 25°, de préférence encore de sensiblement 90°.

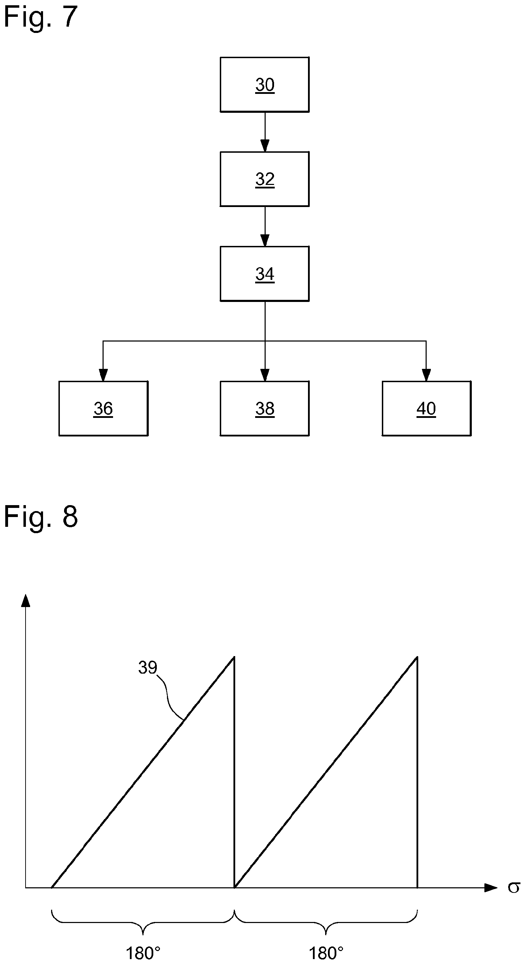

Un procédé selon l'invention de détermination d'au moins un paramètre relatif à un mouvement angulaire de l'axe 4, mis en œuvre par le processeur du système 6, va maintenant être décrit en référence aux figures 7 et 8. On suppose qu'initialement un utilisateur manipule l'axe 4 de manière à le faire tourner sur lui-même autour de la direction longitudinale D1, par exemple en manipulant la couronne 2 pour le réglage de l'heure d'une montre 1. Cette rotation de l'axe 4 entraîne une rotation du réflecteur rotatif 8 autour de la direction longitudinale D1.

De préférence, le procédé comporte une étape initiale 30 au cours de laquelle le processeur commande l'allumage de chacune des sources de lumière 16 de manière alternée.

Au cours d'une étape initiale ou suivante 32, le processeur reçoit deux signaux électriques 26A, 26B issus des deux détecteurs de lumière 18. Chacun des signaux électriques 26A, 26B est représentatif d'un faisceau de lumière réfléchie 24 issu du réflecteur 8, et présente une forme sensiblement sinusoïdale.

Au cours d'une étape suivante 34, le processeur détermine la fréquence de chacun des deux signaux sinusoïdaux 26A, 26B reçus.

Au cours d'une étape suivante 36, le processeur détermine la vitesse de rotation de l'axe 4, par comparaison entre la fréquence déterminée au cours de l'étape 34 et une table de correspondance pré-enregistrée dans les moyens mémoire du système.

De préférence, le procédé comporte une étape parallèle ou suivante 38, au cours de laquelle le processeur représente les deux signaux électriques 26A, 26B reçus comme le sinus et le cosinus d'une même fonction, puis calcule une fonction d'arc tangente ayant pour variable le rapport entre les deux signaux. Le résultat de ce calcul est représenté à la figure 8, pour l'exemple de réalisation particulier des signaux 26A, 26B représentés à la figure 6. On remarque que sur une demi période de révolution du réflecteur rotatif 8, correspondant à 180°, la courbe obtenue 39 est une droite. Ceci permet ainsi au processeur, en ayant accès à une valeur donnée de la fonction d'arc tangente calculée, d'en déduire la position angulaire de l'axe 4, et ce de manière non équivoque. En outre, le signe de la pente de la droite obtenue est fonction du sens de rotation de l'axe 4. Ainsi, le procédé peut comporter une étape parallèle ou suivante 40 au cours de laquelle le processeur détermine, en fonction du signe de la pente de la droite obtenue, le sens de rotation de l'axe 4.

Il est à noter que, pour obtenir la forme de la courbe 39 telle que représentée à la figure 8, il est nécessaire que les signaux 26A, 26B soient déphasés, de préférence d'au moins 25°. Un tel déphasage est obtenu par l'agencement tête-bêche des paires 10A, 10B d'émetteur-détecteur, tel que précédemment décrit, et/ou par la disposition non symétrique des deux paires 10A, 10B d'émetteur-détecteur de part et d'autre du réflecteur rotatif 8, telle que décrite précédemment. Ainsi, le déphasage résultant entre les signaux 26A, 26B permet d'obtenir la forme de la courbe 39 telle que représentée à la figure 8, et permet par conséquent au processeur de pouvoir déterminer précisément la position angulaire et le sens de rotation de l'axe 4.

Les moyens mémoire stockent un produit programme d'ordinateur comportant des instructions de programme qui, lorsqu'exécutées par le processeur du système 6, sont aptes à mettre en œuvre le procédé tel que décrit ci-dessus.

## Revendications

1. Système (6) de détermination d'au moins un paramètre relatif à un mouvement angulaire d'un axe (4), notamment d'un axe (4) solidaire d'une couronne (2) de pièce d'horlogerie (1), le système (6) comprenant :
- un axe (4) configuré de manière à pouvoir tourner sur lui-même autour d'une direction longitudinale (D1) ;
- un réflecteur rotatif (8) monté sur l'axe (4), autour dudit axe (4) ;
- deux paires (10A, 10B) d'émetteur-détecteur, les deux paires (10A, 10B) étant disposées de part et d'autre du réflecteur rotatif (8), en regard du réflecteur (8), chaque paire (10A, 10B) d'émetteur-détecteur comprenant une source de lumière (16) destinée à illuminer une partie du réflecteur (8), et un détecteur de lumière (18) destiné à recevoir un faisceau de lumière réfléchie (24) issu du réflecteur (8) et à générer un signal électrique (26A, 26B) représentatif dudit faisceau (24) ; et
- un processeur configuré pour traiter chacun des signaux électriques générés par les détecteurs (18), et pour déterminer, en fonction du résultat du traitement, ledit au moins un paramètre relatif au mouvement angulaire de l'axe (4) ;
dans lequel le réflecteur rotatif (8) est formé à partir d'un cylindre de révolution, sur les bords duquel sont ménagés plusieurs chanfreins obliques contigus (14), la surface extérieure (12) de la partie non chanfreinée du réflecteur (8) vue depuis chaque paire (10A, 10B) d'émetteur-détecteur formant une partie active réfléchissante du réflecteur (8) pour ladite paire, qui évolue lorsque le réflecteur (8) tourne sur lui-même, d'une manière telle que le signal électrique représentatif (26A, 26B) généré par ledit détecteur (18) de la paire (10A, 10B) présente une forme sensiblement sinusoïdale lorsque le réflecteur (8) tourne sur lui-même de manière régulière selon un même sens de rotation (S1, S2).

2. Système (6) de détermination selon la revendication 1, **caractérisé en ce que** les deux paires (10A, 10B) d'émetteur-détecteur sont agencées par rapport au réflecteur rotatif (8) de manière à ce que les deux émetteurs (16), respectivement les deux détecteurs (18), sont agencés tête-bêche l'un par rapport à l'autre.

3. Système (6) de détermination selon la revendication 1 ou 2, **caractérisé en ce que** les deux paires (10A, 10B) d'émetteur-détecteur sont disposées de part et d'autre du réflecteur rotatif (8), sur un cercle dont le centre est sensiblement le centre (22) du réflecteur rotatif (8), et sont décalées entre elles d'un angle présentant une valeur distincte de 180°.

4. Système (6) de détermination selon la revendication 3, **caractérisé en ce que** les deux paires (10A, 10B) d'émetteur-détecteur et le réflecteur rotatif (8) sont disposés de sorte à définir un agencement spatial sensiblement en forme de « y », le réflecteur rotatif (8) étant disposé au centre du « y », une des paires d'émetteur-détecteur (10A) étant disposée à l'extrémité libre d'une branche courte du « y », l'autre paire d'émetteur-détecteur (10B) étant disposée à l'extrémité libre de la branche longue du « y ».

5. Système (6) de détermination selon l'une quelconque des revendications précédentes, **caractérisé en ce que**, dans chaque paire (10A, 10B) d'émetteur-détecteur, l'émetteur (16) et le détecteur (18) sont isolés optiquement l'un de l'autre.

6. Système (6) de détermination selon la revendication 1, **caractérisé en ce que** chaque chanfrein oblique (14) définit un angle sensiblement égal à 50° avec un plan tangent à la surface extérieure (12) de la partie non chanfreinée du réflecteur (8), et parallèle à la direction longitudinale (D1).

7. Système (6) de détermination selon la revendication 1, **caractérisé en ce que** le réflecteur rotatif (8) est en métal, la surface extérieure (12) de la partie non chanfreinée du réflecteur en métal étant polie.

8. Pièce d'horlogerie (1) comportant un système (6) de détermination d'au moins un paramètre relatif à un mouvement angulaire d'un axe (4), **caractérisée en ce que** le système (6) de détermination est conforme à l'une quelconque des revendications précédentes.

9. Pièce d'horlogerie (1) selon la revendication 8, **caractérisée en ce que** la pièce d'horlogerie (1) est une montre à quartz munie d'une couronne (2) de réglage de l'heure, ledit axe (4) étant l'axe (4) solidaire de la couronne (2).

10. Procédé de détermination d'au moins un paramètre relatif à un mouvement angulaire d'un axe (4), notamment d'un axe (4) solidaire d'une couronne (2) de pièce d'horlogerie (1), au moyen d'un système (6) de détermination selon l'une quelconque des revendications 1 à 7, le procédé comprenant les étapes suivantes, mises en œuvre par le processeur :
- recevoir (32) deux signaux électriques (26A, 26B) issus des deux détecteurs de lumière (18), chacun des signaux électriques (26A, 26B) étant représentatif d'un faisceau de lumière réfléchie (24) issu du réflecteur (8), chacun des signaux électriques (26A, 26B) présentant une forme sensiblement sinusoïdale ;
- déterminer (34) la fréquence de chacun des deux signaux électriques reçus (26A, 26B) ;
- déterminer (36), par comparaison entre la fréquence déterminée par le processeur et une table de correspondance pré-enregistrée dans des moyens mémoire du système (6), la vitesse de rotation de l'axe (4).

11. Procédé de détermination selon la revendication 10 lorsque le système (6) de détermination dépend de la revendication 3, **caractérisé en ce qu'**il comprend en outre une étape (38), mise en œuvre par le processeur, consistant à représenter les deux signaux électriques (26A, 26B) reçus comme le sinus et le cosinus d'une même fonction et à calculer une fonction d'arc tangente (39) ayant pour variable le rapport entre les deux signaux.

12. Procédé de détermination selon la revendication 11, **caractérisé en ce qu'**il comprend en outre une étape (40), mise en œuvre par le processeur, consistant à déterminer, en fonction du signe de la pente de la fonction d'arc tangente (39) calculée, le sens de rotation de l'axe (4).

13. Procédé de détermination selon l'une des revendications 10 à 12, **caractérisé en ce qu'**il comprend en outre une étape (30), mise en œuvre par le processeur, consistant à commander l'allumage de chacune des sources de lumière (16) de manière alternée.

14. Produit programme d'ordinateur comportant des instructions de programme stockées dans des moyens mémoire d'un système (6) selon l'une des revendications 1 à 7 et qui, lorsqu'exécutées par le processeur du système (6), sont aptes à mettre en œuvre le procédé selon l'une des revendications 10 à 13, pour la détermination d'au moins un paramètre relatif à un mouvement angulaire d'un axe (4).

## Patentansprüche

1. System (6) zur Bestimmung mindestens eines Parameters bezüglich einer Winkelbewegung einer Welle (4), insbesondere einer Welle (4), die fest mit einer Krone (2) eines Zeitmessgeräts (1) verbunden ist, wobei das System (6) umfasst:
- eine Welle (4), die konfiguriert ist, sich um sich selbst um eine Längsrichtung (D1) drehen zu können;
- einen drehbaren Reflektor (8), der an der Welle (4) und um die Welle (4) montiert ist;
- zwei Sender-Detektor-Paare (10A, 10B), wobei die beiden Paare (10A, 10B) auf beiden Seiten des drehbaren Reflektors (8) gegenüber dem Reflektor (8) angeordnet sind, wobei jedes Sender-Detektor-Paar (10A, 10B) eine Lichtquelle (16), die dazu bestimmt ist, einen Teil des Reflektors (8) zu beleuchten, und einen Lichtdetektor (18) umfasst, der dazu bestimmt ist, einen von dem Reflektor (8) ausgehenden reflektierten Lichtstrahl (24) zu empfangen und ein elektrisches Signal (26A, 26B), das repräsentativ für den Strahl (24) ist, zu erzeugen; und
- einen Prozessor, der konfiguriert ist, jedes der elektrischen Signale, die von den Detektoren (18) erzeugt werden, zu verarbeiten und auf der Grundlage des Ergebnisses der Verarbeitung den mindestens einen Parameter bestimmt, der sich auf die Winkelbewegung der Welle (4) bezieht;
wobei der drehbare Reflektor (8) aus einem rotationssymmetrischen Zylinder gebildet ist, an dessen Umrandung mehrere aneinander grenzende, querverlaufende Abschrägungen (14) ausgebildet sind, wobei die Außenfläche (12) des nicht abgeschrägten Teils des Reflektors (8), gesehen von jedem Sender-Detektor-Paar (10A, 10B) aus, einen reflektierenden aktiven Teil des Reflektors (8) für das Paar bildet und sich dann, wenn sich der Reflektor (8) um sich selbst dreht, derart entwickelt, dass das repräsentative elektrische Signal (26A, 26B), das von dem Detektor (18) des Paares (10A, 10B) erzeugt wird, eine im Wesentlichen sinusförmige Form aufweist, wenn sich der Reflektor (8) regulär um sich selbst in einer gleichen Drehrichtung (S1, S2) dreht.

2. System (6) zur Bestimmung nach Anspruch 1, **dadurch gekennzeichnet, dass** die beiden Sender-Detektor-Paare (10A, 10B) in Bezug auf den drehbaren Reflektor (8) so angeordnet sind, dass die beiden Sender (16) bzw. die beiden Detektoren (18) zueinander entgegengesetzt angeordnet sind.

3. System (6) zur Bestimmung nach Anspruch 1 oder 2, **dadurch gekennzeichnet, dass** die beiden Sender-Detektor-Paare (10A, 10B) zu beiden Seiten des drehbaren Reflektors (8) auf einem Kreis angeordnet sind, dessen Mittelpunkt im Wesentlichen der Mittelpunkt (22) des drehbaren Reflektors (8) ist, und zueinander um einen Winkel versetzt sind, der einen von 180° verschiedenen Wert besitzt.

4. System (6) zur Bestimmung nach Anspruch 3, **dadurch gekennzeichnet, dass** die beiden Sender-Detektor-Paare (10A, 10B) und der drehbare Reflektor (8) so angeordnet sind, dass eine räumliche Anordnung im Wesentlichen in Form eines "y" definiert wird, wobei der drehbare Reflektor (8) in der Mitte des "y" angeordnet ist, eines der Sender-Detektor-Paare (10A) am freien Ende eines kurzen Schenkels des "y" angeordnet ist und das andere Sender-Detektor-Paar (10B) am freien Ende des langen Schenkels des "y" angeordnet ist.

5. System (6) zur Bestimmung nach einem der vorhergehenden Ansprüche, **dadurch gekennzeichnet, dass** in jedem Sender-Detektor-Paar (10A, 10B) der Sender (16) und der Detektor (18) optisch voneinander isoliert sind.

6. System (6) zur Bestimmung nach Anspruch 1, **dadurch gekennzeichnet, dass** jede querverlaufende Abschrägung (14) einen Winkel von im Wesentlichen 50° mit einer Ebene bildet, die tangential zur Außenfläche (12) des nicht abgeschrägten Teils des Reflektors (8) und parallel zur der Längsrichtung (D1) verläuft.

7. System (6) zur Bestimmung nach Anspruch 1, **dadurch gekennzeichnet, dass** der drehbare Reflektor (8) aus Metall besteht, wobei die Außenfläche (12) des nicht abgeschrägten Teils des Reflektors aus Metall poliert wird.

8. Zeitmessgerät (1), umfassend ein System (6) zur Bestimmung mindestens eines Parameters in Bezug auf eine Winkelbewegung einer Welle (4), **dadurch gekennzeichnet, dass** das System (6) zur Bestimmung einem der vorhergehenden Ansprüche entspricht.

9. Zeitmessgerät (1) nach Anspruch 8, **dadurch gekennzeichnet, dass** das Zeitmessgerät (1) eine Quarzuhr ist, die mit einer Krone (2) zum Einstellen der Uhrzeit versehen ist, wobei die Welle (4) die fest mit der Krone (2) verbundene Welle (4) ist.

10. Verfahren zur Bestimmung mindestens eines Parameters bezüglich einer Winkelbewegung einer Welle (4), insbesondere einer Welle (4), die fest mit einer Krone (2) eines Zeitmessgeräts (1) verbunden ist, mittels eines Systems (6) zur Bestimmung nach einem der Ansprüche 1 bis 7, wobei das Verfahren die folgenden von dem Prozessor ausgeführten Schritte umfasst:
- Empfangen (32) von zwei elektrischen Signalen (26A, 26B), die von den beiden Lichtdetektoren (18) stammen, wobei jedes der elektrischen Signale (26A, 26B) repräsentativ für einen reflektierten Lichtstrahl (24) von dem Reflektor (8) ist, wobei jedes der elektrischen Signale (26A, 26B) eine im Wesentlichen sinusförmige Form aufweist;
- Bestimmen (34) der Frequenz jedes der beiden erfassten elektrischen Signale (26A, 26B);
- Bestimmen (36) der Drehgeschwindigkeit der Welle (4) durch Vergleichen der durch den Prozessor bestimmten Frequenz mit einer im Voraus in Speichermitteln des Systems (6) aufgezeichneten Korrespondenztabelle.

11. Verfahren zur Bestimmung nach Anspruch 10, wenn das System (6) zur Bestimmung nach Anspruch 3 ausgebildet ist, **dadurch gekennzeichnet, dass** es ferner einen vom Prozessor ausgeführten Schritt (38) umfasst, der darin besteht, die beiden erfassten elektrischen Signale (26A, 26B) als Sinus und den Kosinus ein und derselben Funktion darzustellen und eine Arkustangensfunktion (39) zu berechnen mit dem Verhältnis der beiden Signale als Variable.

12. Verfahren zur Bestimmung nach Anspruch 11, **dadurch gekennzeichnet, dass** es ferner einen vom Prozessor durchgeführten Schritt (40) umfasst, der darin besteht, in Abhängigkeit vom Vorzeichen der Steigung der berechneten Arkustangensfunktion (39) die Drehrichtung der Welle (4) zu bestimmen.

13. Verfahren zur Bestimmung nach einem der Ansprüche 10 bis 12, **dadurch gekennzeichnet, dass** es ferner einen vom Prozessor durchgeführten Schritt (30) umfasst, der darin besteht, das Einschalten jeder der Lichtquellen (16) in abwechselnder Weise zu steuern.

14. Computerprogrammprodukt auf dem Programmanweisungen, die in Speichermitteln eines Systems (6) nach einem der Ansprüche 1 bis 7 gespeichert sind, enthalten sind und das, wenn es vom Prozessor des Systems (6) ausgeführt wird, geeignet ist, das Verfahren nach einem der Ansprüche 10 bis 13 durchzuführen, um mindestens einen Parameter, der sich auf eine Winkelbewegung einer Welle (4) bezieht, zu bestimmen.

## Claims

1. System (6) for determining at least one parameter relating to an angular movement of an arbor (4), particularly a stem (4) integral with a timepiece (1) crown (2), the system (6) comprising:
- an arbor (4) configured to be able to rotate on itself around a longitudinal direction (D1);
- a rotating reflector (8) mounted on the arbor (4), around said arbor (4);
- two emitter/detector pairs (10A, 10B), the two pairs (10A, 10B) being disposed on either side of the rotating reflector (8), facing the reflector (8), each emitter/detector pair (10A, 10B) comprising a light source (16) intended to illuminate one part of the reflector (8), and a light detector (18) intended to receive a reflected light beam (24) from the reflector (8) and to generate an electrical signal (26A, 26B) representative of said beam (24); and
- a processor configured to process each of the electrical signals generated by the detectors (18), and to determine, as a function of the processing result, said at least one parameter relating to the angular movement of the arbor (4);
wherein the rotating reflector (8) is formed from a cylinder of revolution, on the edges of which are arranged several contiguous, oblique chamfers (14), the outer surface (12) of the non-chamfered part of the reflector (8) seen from each emitter/detector pair (10A, 10B) forming an active reflective portion of the reflector (8) for said pair, which changes when the reflector (8) rotates on itself, such that the representative electrical signal (26A, 26B) generated by said detector (18) of the pair (10A, 10B) has a substantially sinusoidal shape when the reflector (8) rotates on itself in a regular manner in a same direction of rotation (S1, S2).

2. Determination system (6) according to claim 1, **characterized in that** the two emitter/detector pairs (10A, 10B) are arranged with respect to the rotating reflector (8) such that the two emitters (16), respectively the two detectors (18), are arranged head-to-tail with respect to each other.

3. Determination system (6) according to claim 1 or 2, **characterized in that** the two emitter/detector pairs (10A, 10B) are disposed on either side of the rotating reflector (8), on a circle whose centre is substantially the centre (22) of the rotating reflector (8), and are offset from each other by an angle having a value other than 180°.

4. Determination system (6) according to claim 3, **characterized in that** the two emitter/detector pairs (10A, 10B) and the rotating reflector (8) are arranged to define a substantially Y-shaped spatial arrangement, the rotating reflector (8) being disposed at the centre of the Y, a first emitter/detector pair (10A) being disposed at the free end of a short arm of the Y, and the other emitter/detector pair (10B) being disposed at the free end of the long arm of the Y.

5. Determination system (6) according to any of the preceding claims, **characterized in that**, in each emitter/detector pair (10A, 10B), the emitter (16) and the detector (18) are optically isolated from each other.

6. Determination system (6) according to claim 1, **characterized in that** each oblique chamfer (14) defines an angle substantially equal to 50° with a plane tangent to the outer surface (12) of the non-chamfered part of the reflector (8) and parallel to the longitudinal direction (D1).

7. Determination system (6) according to claim 1, **characterized in that** the rotating reflector (8) is made of metal, the outer surface (12) of the non-chamfered part of the metal reflector being polished.

8. Timepiece (1) comprising a system (6) for determining at least one parameter relating to an angular movement of an arbor (4), **characterized in that** the determination system (6) conforms to any of the preceding claims.

9. Timepiece (1) according to claim 8, **characterized in that** the timepiece (1) is a quartz watch provided with a time-setting crown (2), said arbor (4) being the stem (4) integral with the crown (2).

10. Method for determining at least one parameter relating to the angular movement of an arbor (4), particularly a stem (4) integral with a crown (2) of a timepiece (1), by means of a determination system (6) according to any of claims 1 to 7, the method comprising the following steps, implemented by the processor:
- receiving (32) two electrical signals (26A, 26B) from two light detectors (18), each of the electrical signals (26A, 26B) being representative of a reflected light beam (24) from the reflector (8), each of the electrical signals (26A, 26B) having a substantially sinusoidal shape;
- determining (34) the frequency of each of the two received electrical signals (26A, 26B);
- determining (36), by comparison between the frequency determined by the processor and a correspondence table pre-stored in memory means of the system (6), the speed of rotation of the arbor (4).

11. Determination method according to claim 10 when the determination system (6) depends on claim 3, **characterized in that** the method further includes a step (38), implemented by the processor, consisting in representing the two received electrical signals (26A, 26B) as the sine and cosine of the same function and calculating an arctangent function (39) whose variable is the ratio between the two signals.

12. Determination method according to claim 11, **characterized in that** the method further includes a step (40), implemented by the processor, consisting in determining, according to the sign of the slope of the calculated arctangent function (39), the direction of rotation of the arbor (4).

13. Determination method according to any of claims 10 to 12, **characterized in that** the method further includes a step (30), implemented by the processor, consisting in alternately controlling the illumination of each of the light sources (16).

14. Computer program product comprising program instructions stored in memory means of a system (6) according to any of claims 1 to 7 and which, when executed by the system (6) processor, are able to implement the method according to any of claims 10 to 13, for the determination of at least one parameter relating to an angular movement of an arbor (4).
